(19) Europäisches Patentamt
European Patent Office
Office européen des brevets

(11) Veröffentlichungsnummer: **0 185 974**
**A1**

# (12) EUROPÄISCHE PATENTANMELDUNG

(21) Anmeldenummer: 85115276.9

(22) Anmeldetag: 02.12.85

(51) Int. Cl.⁴: C 07 F 9/65
A 01 N 57/16

(30) Priorität: 13.12.84 DE 3445465

(43) Veröffentlichungstag der Anmeldung:
02.07.86 Patentblatt 86/27

(84) Benannte Vertragsstaaten:
AT BE CH DE FR GB IT LI NL

(71) Anmelder: BAYER AG
Konzernverwaltung RP Patentabteilung
D-5090 Leverkusen 1 Bayerwerk(DE)

(72) Erfinder: Maurer, Fritz, Dr.
Roeberstrasse 8
D-5600 Wuppertal 1(DE)

(72) Erfinder: Homeyer, Bernhard, Dr.
Obere Strasse 28
D-5090 Leverkusen 3(DE)

(72) Erfinder: Becker, Benedikt, Dr.
Metzkausener Strasse 14
D-4020 Mettmann(DE)

(72) Erfinder: Behrenz, Wolfgang, Dr.
Untergründemich 14
D-5063 Overath(DE)

(72) Erfinder: Stendel, Wilhelm, Dr.
In den Birken 55
D-5600 Wuppertal 1(DE)

## (54) Pyrimidinyl-thionophosphorsäureester.

(57) Die Erfindung betrifft neue Pyrimidin-4-yl-thionophosphorsäureester der Formel (I)

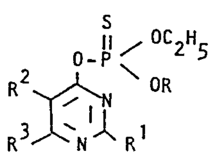

(I)

in welcher

R für i-Propyl oder sec.-Butyl steht,

$R^1$ für Wasserstoff, gegebenenfalls substituiertes Alkyl, Alkoxy, Alkylthio, Cycloalkyl, Dialkylamino doer Aryl steht,

$R^2$ für Wasserstoff, Halogen oder für gegebenenfalls substituierte Reste aus der Reihe Alkyl, Alkoxy oder Alkylthio steht und

$R^3$ für Wasserstoff oder gegebenenfalls substituierte Reste aus der Reihe Alkyl, Alkoxy oder Aryl stehen,

welche als Schädlingsbekämpfungsmittel verwendet werden können.

EP 0 185 974 A1

BAYER AKTIENGESELLSCHAFT 5090 Leverkusen, Bayerwerk
Konzernverwaltung RP S/by-c
Patentabteilung (I)

# Pyrimidinyl-thionophosphorsäureester

Die Erfindung betrifft neue Pyrimidin-4-yl-thionophosphorsäureester, ein Verfahren zu ihrer Herstellung und ihre Verwendung in Schädlingsbekämpfungsmitteln, insbesondere als Insektizide, Akarizide und Nematizide.

Es ist bekannt, daß bestimmte Thionophosphorsäureester wie z.B. O,O-Diethyl-O-(6-methyl-2-i-propyl-pyrimidin-4-yl)-, O,O-Dimethyl-O-(6-ethoxy-2-ethyl-pyrimidin-4-yl)- und O-Ethyl-O-(6-tert.-butyl-2-i-propyl-pyrimidin-4-yl)-S-n-propyl-thionophosphorsäureester insektizid wirksam sind (vgl. US-PS 2 754 243, DE-AS 2 209 554 und DE-OS 2 639 433).

Die Wirkung und die Wirkungsdauer dieser Verbindungen sind jedoch, insbesondere bei bestimmten Insekten, nicht immer voll zufriedenstellend.

Es wurden nun neue Pyrimidin-4-yl-thionophosphorsäureester der Formel (I) gefunden,

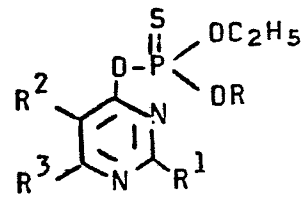

(I)

in welcher

R für i-Propyl oder sec.-Butyl steht,

$R^1$ für Wasserstoff, gegebenenfalls substituiertes Alkyl, Alkoxy, Alkylthio, Cycloalkyl, Dialkylamino oder Aryl steht,

$R^2$ für Wasserstoff, Halogen oder für gegebenenfalls substituierte Reste aus der Reihe Alkyl, Alkoxy oder Alkylthio steht und

$R^3$ für Wasserstoff oder gegebenenfalls substituierte Reste aus der Reihe Alkyl, Alkoxy oder Aryl steht.

Weiterhin wurde gefunden, daß man die neuen Pyrimidin-4-yl-thionophosphorsäureester der Formel (I) erhält, wenn man 4-Hydroxypyrimidine der Formel (II)

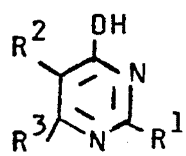

(II)

in welcher

$R^1$, $R^2$ und $R^3$ die oben angegebenen Bedeutungen haben,

oder die entsprechenden Alkalimetall-, Erdalkalimetall- oder Ammoniumsalze mit Halogeniden der Formel (III),

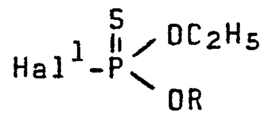

(III)

in welcher

R die oben angegebene Bedeutung hat und

$Hal^1$ für Halogen, wie Chlor oder Brom steht,

gegebenenfalls in Gegenwart eines Säureakzeptors und gegebenenfalls in Gegenwart eines Verdünnungsmittels umsetzt.

Die neuen Pyrimidin-4-yl-thionophosphorsäureester der Formel (I) zeichnen sich in überragender Weise durch eine besonders hohe Wirksamkeit als Schädlingsbekämpfungsmittel, insbesondere als Insektizide, Akarizide und Nematizide aus.

Als gegebenenfalls substituiertes Alkyl $R^1$, $R^2$ und $R^3$ steht geradkettiges oder verzweigtes Alkyl mit vorzugsweise 1 bis 8, besonders bevorzugt 1 bis 6 und insbesondere 1 bis 4 Kohlenstoffatomen. Beispielhaft

seien gegebenenfalls substituiertes Methyl, Ethyl, n- und i-Propyl, n-, i- und t-Butyl, genannt.

Als gegebenenfalls substituiertes Alkoxy $R^2$ und $R^3$ sowie als Alkoxy $R^1$ steht geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und i-Propoxy,und n-, i- und t-Butoxy genannt.

Als gegebenenfalls substituiertes Alkylthio $R^2$ sowie als Alkylthio $R^1$ steht geradkettiges oder verzweigtes Alkylthio mit vorzugsweise 1 bis 6, insbesondere 1 bis 4 Kohlenstoffatomen. Beispielhaft seien gegebenenfalls substituiertes Methylthio, Ethylthio, n- und i-Propylthio, n-, i- und t-Butylthio genannt.

Als Cycloalkyl $R^1$ steht mono-, bis- und tricyclisches Cycloalkyl mit vorzugsweise 3 bis 10, insbesondere 3, 5 oder 6 Kohlenstoffatomen, Beispielhaft seien Cyclopropyl, Cyclobutyl, Cyclopentyl, Cyclohexyl, Cycloheptyl, Bicyclo(2,2,1)heptyl, Bicyclo(2,2,2)octyl und Adamantyl genannt.

Als gegebenenfalls substituiertes Aryl $R^3$ bzw. Aryl $R^1$ steht vorzugsweise Phenyl oder Naphthyl, insbesondere Phenyl.

Dialkylamino $R^1$ enthält vorzugsweise 1 bis 4, insbesondere 1 oder 2 Kohlenstoffatome je Alkylgruppe.

Beispielhaft seien Dimethylamino, Diethylamino und Methyl-ethylamino aufgeführt.

Halogen bedeutet (wo nichts anderes angegeben wird) Fluor, Chlor, Brom, Jod, vorzugsweise Fluor, Chlor und Brom, insbesondere Chlor.

Die als gegebenenfalls substituiert bezeichneten Reste können einen oder mehrere, gleiche oder verschiedene Substituenten enthalten. Als bevorzugte Substituenten seien aufgeführt: Halogen, wie Fluor, Chlor und Brom, vorzugsweise Chlor, $C_1$-$C_4$-Alkoxy, wie Methoxy und Ethoxy, $C_1$-$C_4$-Alkylthio, wie Methylthio und Ethylthio, $C_1$-$C_4$-Alkylsulfinyl oder $C_1$-$C_4$-Alkylsulfonyl, wie Methylsulfonyl und Ethylsulfonyl.

Die Erfindung betrifft vorzugsweise Verbindungen der Formel (I), in welcher

R für i-Propyl oder sec.-Butyl steht und

$R^1$ für Wasserstoff, für gegebenenfalls durch $C_1$-$C_4$-Alkoxy, $C_1$-$C_4$-Alkylthio, $C_1$-$C_4$-Alkylsulfinyl oder $C_1$-$C_4$-Alkylsulfonyl substituiertes $C_1$-$C_6$-Alkyl, für $C_1$-$C_6$-Alkoxy, $C_1$-$C_6$-Alkylthio, $C_3$-$C_6$-Cycloalkyl, Di-($C_1$-$C_4$-alkyl)-amino oder Phenyl steht,

$R^2$ für Wasserstoff, Chlor, Brom oder für gegebenenfalls durch $C_1$-$C_4$-Alkoxy, $C_1$-$C_4$-Alkylthio, $C_1$-$C_4$-Alkylsulfinyl oder $C_1$-$C_4$-Alkylsulfonyl substituierte Reste aus der Reihe $C_1$-$C_6$-Alkyl, $C_1$-$C_6$-Alkoxy oder $C_1$-$C_6$-Alkylthio steht und

$R^3$ für Wasserstoff, Phenyl oder für gegebenenfalls durch $C_1$-$C_4$-Alkoxy, $C_1$-$C_4$-Alkylthio, $C_1$-$C_4$-Alkylsulfinyl pder $C_1$-$C_4$-Alkylsulfonyl substituierte Reste aus der Reihe $C_1$-$C_6$-Alkyl oder $C_1$-$C_6$-Alkoxy steht.

Besonders bevorzugt sind die Verbindungen der Formel (I), in welcher

R für i-Propyl oder sec.-Butyl steht und

$R^1$ für Wasserstoff, für gegebenenfalls durch $C_1$-$C_2$-Alkoxy, $C_1$-$C_2$-Alkylthio, $C_1$-$C_2$-Alkylsulfinyl oder $C_1$-$C_2$-Alkylsulfonyl substituiertes $C_1$-$C_4$-Alkyl, für $C_1$-$C_4$-Alkoxy, $C_1$-$C_4$-Alkylthio, Cyclopropyl, Cyclopentyl, Cyclohexyl, Di-($C_1$-$C_2$)-alkylamino oder Phenyl steht,

$R^2$ für Wasserstoff, Chlor, für $C_1$-$C_4$-Alkyl, $C_1$-$C_4$-Alkoxy oder $C_1$-$C_4$-Alkylthio steht und

$R^3$ für Wasserstoff, Phenyl oder gegebenenfalls durch $C_1$-$C_2$-Alkoxy, $C_1$-$C_2$-Alkylthio, $C_1$-$C_2$-Alkylsulfinyl oder $C_1$-$C_2$-Alkylsulfonyl substituierte Reste aus der Reihe $C_1$-$C_4$-Alkyl oder $C_1$-$C_4$-Alkoxy steht.

Verwendet man beispielsweise für das erfindungsgemäße Verfahren O-Ethyl-O-i-propyl-thionophosphorsäurediesterchlorid und 4-Hydroxy-pyrimidin als Ausgangsstoffe, so kann die entsprechende Reaktion durch das folgende Formelschema skizziert werden:

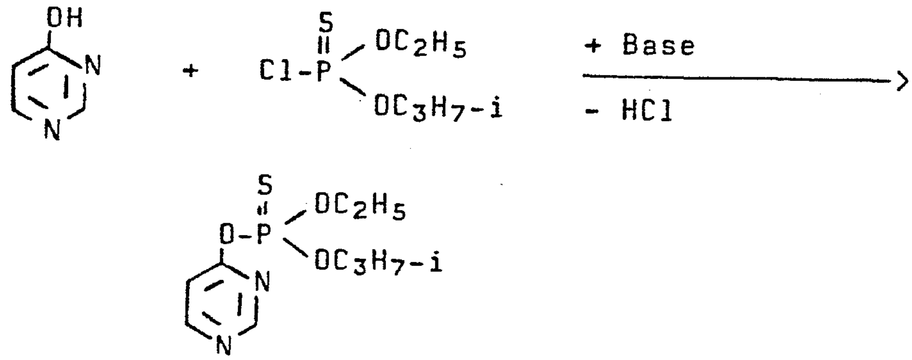


Die beim erfindungsgemäßen Verfahren als Ausgangsstoffe für die Herstellung der neuen Verbindungen der Formel (I) einzusetzenden 4-Hydroxypyrimidine bzw. die entsprechenden Alkalimetall-, Erdalkalimetall- oder Ammoniumsalze sind durch die Formel (II) definiert. In dieser Formel stehen $R^1$, $R^2$ und $R^3$ für diejenigen Reste, welche oben bei der Definition in Formel (I) angegeben sind. Als Alkali- oder Erdalkalimetallsalze werden vorzugsweise die Natrium-, Kalium- oder Calciumsalze eingesetzt.

Die Verbindungen der Formel (II) sind bekannt und/oder können nach allgemein bekannten Verfahren und Methoden hergestellt werden (vgl. z.B. DE-OS 3 142 857, DE-OS 2 951 350, DE-OS 2 831 852, DE-OS 2 747 257 und DE-OS 2 737 401).

Als Beispiele für die Verbindungen der Formel (II) bzw. die entsprechenden Natrium-, Kalium-, Calcium- und Ammoniumsalze seien genannt:

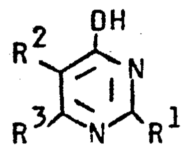

(II)

Tabelle 1

| $R^1$ | $R^2$ | $R^3$ |
|---|---|---|
| H | H | H |
| $C_3H_7$-i | H | H |
| H | H | $CH_3$ |
| $CH_3$ | H | $CH_3$ |
| $C_2H_5$ | H | $CH_3$ |
| $C_3H_7$-n | H | $CH_3$ |
| $C_3H_7$-i | H | $CH_3$ |
| $C_4H_9$-n | H | $CH_3$ |
| $C_4H_9$-i | H | $CH_3$ |
| $C_4H_9$-sec. | H | $CH_3$ |
| $C_4H_9$-tert. | H | $CH_3$ |
| H | H | $C_4H_9$-tert. |
| $CH_3$ | H | $C_4H_9$-tert. |
| $CH_3O$ | H | $CH_3$ |

Tabelle 1 - Fortsetzung

| $R^1$ | $R^2$ | $R^3$ |
|---|---|---|
| $C_2H_5O$ | H | $CH_3$ |
| $i-C_3H_7O$ | H | $CH_3$ |
| $CH_3S$ | H | $CH_3$ |
| $i-C_3H_7S$ | H | $CH_3$ |
| 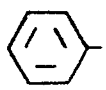 | H | $CH_3$ |
| 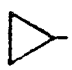 | H | $CH_3$ |
| 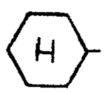 | H | $CH_3$ |
| $(CH_3)_2N$ | H | $CH_3$ |
| $(C_2H_5)_2N$ | H | $CH_3$ |
| $CH_3-O-CH_2$ | $CH_3O$ | H |
| $CH_3-S-CH_2$ | $CH_3O$ | H |
| $CH_3-SO-CH_2$ | $CH_3O$ | H |
| $CH_3-SO_2-CH_2$ | $CH_3O$ | H |
| $CH_3-S-CH_2$ | $C_2H_5O$ | H |
| $CH_3-O-CH_2$ | $C_2H_5O$ | H |
| $C_3H_7-i$ | $CH_3S$ | H |
| $C_3H_7-i$ | Cl | $CH_3$ |

| $R^1$ | $R^2$ | $R^3$ |
|---|---|---|
| $C_4H_9$-tert. | Cl | $CH_3$ |
| $C_3H_7$-i | Br | $CH_3$ |
| $C_4H_9$-tert. | Br | $CH_3$ |
| H | H | 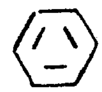 |
| $CH_3$ | H | 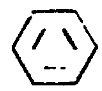 |
| $C_3H_7$-i | H | 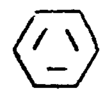 |
| $C_2H_5$ | H | $OC_2H_5$ |
| $C_3H_7$-i | H | $OCH_3$ |
| $C_3H_7$-i | H | $OC_2H_5$ |
| $C_4H_9$-tert. | H | $OCH_3$ |
| $C_3H_7$-i | H | $O-CH_2-S-CH_3$ |
| 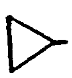 | H | $OC_2H_5$ |
| $C_3H_7$-i | $CH_3$ | $CH_3$ |

Die außerdem als Ausgangsstoffe einzusetzenden Halogenide sind durch die Formel (III) definiert. In dieser Formel steht R für diejenigen Reste, welche bei der Definition in Formel (I) angegeben sind. $Hal^1$ steht in dieser Formel für Halogen, wie insbesondere Chlor oder Brom.

Die Verbindungen der Formel (III) sind bekannt.

Als Beispiele für die Halogenide der Formel (III) seien genannt:
O-Ethyl-O-i-propyl- und O-Ethyl-O-sec.-Butyl-thionophosphorsäureester-chlorid bzw. -bromid.

Das erfindungsgemäße Verfahren zur Herstellung der neuen Pyrimidin-4-yl-thionophosphorsäureester der Formel (I) wird bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether wie Diethyl- und Dibutylether, Glykoldimethylether und Diglykoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B.

Acetonitril und Propionitril, Amide, wie z.B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate, wie Natrium- und Kaliumcarbonat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen 0°C und 100°C durchgeführt. Bevorzugt wird der Bereich zwischen 20°C und 80°C. Die Umsetzungen werden im allgemeinen bei Normaldruck durchgeführt.

Zur Durchführung des erfindungsgemäßen Verfahrens werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel, z.B. Toluol zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta

0185974

migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide und nematizide Wirksamkeit aus. Sie zeigen insbesondere beim Einsatz als Bodeninsektizide eine hervorragende Wirkung gegen Maden wie z.B. Phorbia antiqua-Maden, gegen Käferlarven wie z.B.

Phaedon cochleariae und Blattläusen wie z.B. Myzus persicae. Eine sehr gute Wirksamkeit zeigt sich auch beim Einsatz gegen Nematoden, wie z.B. Globodera rostochiensis.

Die neuen Verbindungen sind also besonders gut für einen Einsatz zur Bekämpfung von Bodeninsekten und Nematoden geeignet.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren

handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Insekten, Milben, Zecken usw. auf dem Gebiet der Tierhaltung und Viehzucht, wobei durch die Bekämpfung der Schädlinge bessere Ergebnisse, z.B. höhere Milchleistungen, höheres Gewicht, schöneres Tierfell, längere Lebensdauer usw. erreicht werden können.

Die Anwendung der erfindungsgemäßen Wirkstoffe geschieht auf diesen Gebieten in bekannter Weise, wie durch äußerliche Anwendung in Form beispielsweise des Tauchens (Dippen), Sprühens (Sprayen), Aufgießens (pour-on and spot-on) und des Einpuderns.

Die biologische Wirksamkeit der erfindungsgemäßen Verbindungen soll anhand der folgenden Beispiele erläutert werden.

Verwendungsbeispiele

In den nachfolgenden Verwendungsbeispielen werden die nachstehend angegebenen Verbindungen als Vergleichsverbindungen eingesetzt:

(A)

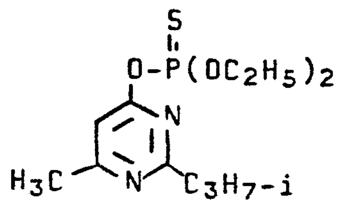

(aus US-PS 2 754 243)

(B)

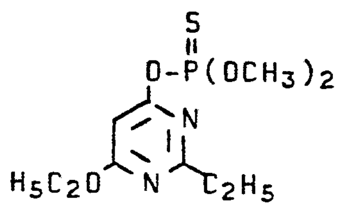

(aus DE-AS 2 209 554)

(C)

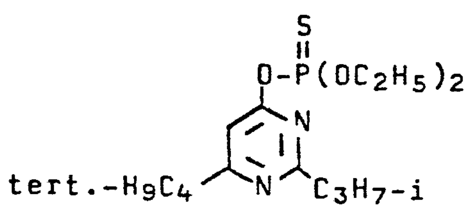

(aus DE-OS 2 639 433)

(D)

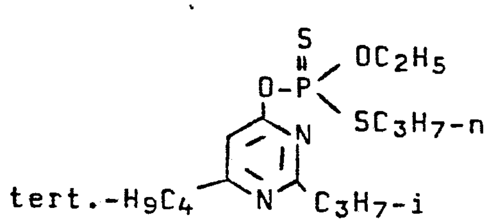

(aus DE-OS 2 639 433)

(E) 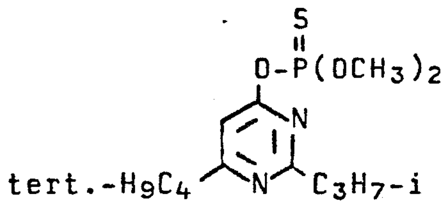

(aus DE-OS 2 639 433)

(F) 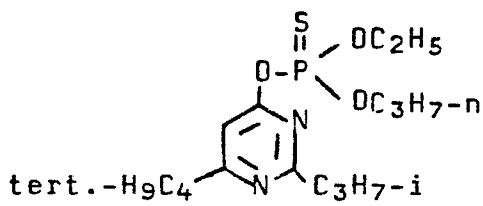

(aus DE-OS 2 639 433)

Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele 1 bis 8 und 9 bei einer beispielhaften Wirkstoffkonzentration von 2,5 ppm eine Abtötung von 100 %, während die Vergleichsverbindungen (D) und (F) bei der gleichen Konzentration 0 % Abtötung ergaben.

Beispiel B

Grenzkonzentrations-Test / Wurzelsystemische Wirkung

Testinsekt: Myzus persicae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle

Testtiere abgetötet sind und 0 %, wenn noch genau so viele Testinsekten leben wie bei der unbehandelten Kontrolle.

Bei diesem Test zeigten z.B. die Verbindungen der Herstellungsbeispiele 1, 3 und 6 bei einer beispielhaften Wirkstoffkonzentration von 20 ppm eine Abtötung von 100 %, während die Vergleichsverbindung (A) bei der gleichen Konzentration eine Abtötung von 0 % ergab.

Beispiel C

Grenzkonzentrations-Test / Wurzelsystemische Wirkung

Testinsekt: Phaedon cochleariae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle

Testtiere abgetötet sind und 0 %, wenn noch genau so viele Testinsekten leben wie bei der unbehandelten Kontrolle.

Bei diesem Test zeigte z.B. die Verbindung des Herstellungsbeispiels 3 bei einer beispielhaften Konzentration von 20 ppm eine Abtötung von 100 %, während die Vergleichsverbindungen (D) und (F) bei der gleichen Konzentration eine Abtötung von 0 % ergaben.

Beispiel D

Grenzkonzentrationstest

Testnematode: Globodera rostochiensis
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18°C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, es ist 0 %, wenn der Befall genau so hoch ist wie bei den Kontrollpflanzen in unbehandeltem, aber in gleicher Weise verseuchtem Boden.

Bei diesem Test zeigten z.B. die Verbindungen der Herstellungsbeispiele 1, 2 und 3 bei einer beispielhaften Wirkstoffkonzentration von 2,5 ppm eine Abtötung von 100 %, während die Vergleichsverbindung (A) bei der gleichen Konzentration eine Abtötung von 0 % ergab.

0185974

Beispiel E

Phaedon-Larven-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käferlarven abgetötet wurden; 0 % bedeutet, daß keine Käfer-Larven abgetötet wurden.

Bei diesem Test zeigten z.B. bei einer Konzentration von 0,001 % Verbindungen der Herstellungsbeispiele 2, 3 und 8 Abtötungen von 80 % (2 und 8) bzw. von 100 % (3), während bei der gleichen Konzentration die Vergleichsverbindungen (A), (C), (D), (E) und (F) eine Abtötung von 0 % ergaben.

0185974

Beispiel F

Myzus-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigten z.B. die Verbindungen der Herstellungsbeispiele 1 bis 9 bei einer beispielhaften Konzentration von 0,01 % nach 1 Tag eine Abtötung von 98-100 %, während unter den gleichen Bedingungen die Vergleichsverbindungen (E) und (C) eine Abtötung von 0 % ergaben.

Beispiel G

Tetranychus-Test (resistent)

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigten z.B. die Verbindung des Herstellungsbeispiels 3 bei einer beispielhaften Wirkstoffkonzentration von 0,01 % nach 2 Tagen eine Abtötung von 98 %, während die Vergleichsverbindungen (A), (B), (C), (D), (E) und (F) bei der gleichen Konzentration eine Abtötung von 0 % ergaben.

Beispiel H

$LD_{100}$-Test

Testtiere: Peucophaemadeirae
Zahl der Testtiere: 5
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. die Verbindungen der Herstellungsbeispiele 1, 4, 5, 6 und 7 bei einer beispielhaften Wirkstoffkonzentration von 0,02 % eine Abtötung von 100 %, während die Vergleichsverbindungen (C), (E) und (F) bei der gleichen Konzentration eine Abtötung von 0 % ergaben.

Beispiel I

Test mit Lucilia cuprina resistent-Larven
(OP-resistenter Goondiwindi-Stamm)

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigten z.B. die Verbindung des Herstellungsbeispiels 4 bei einer beispielhaften Konzentration von 3 ppm eine Abtötung von 100 %.

Die Herstellung der erfindungsgemäßen Verbindungen der allgemeinen Formel (I) soll anhand der folgenden Beispiele erläutert werden:

Beispiel 1

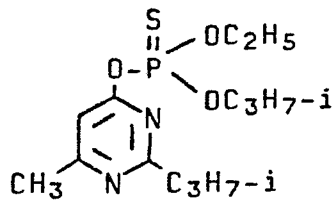

Eine Mischung aus 15,2 g (0,1 Mol) 4-Hydroxy-6-methyl-2-iso-propyl-pyrimidin, 20,7 g (0,15 Mol) Kaliumcarbonat, 20,2 g (0,1 Mol) O-Ethyl-O-i-propyl-thionophosphorsäurediesterchlorid und 100 ml Acetonitril wird 2 Stunden bei 50°C gerührt. Dann wird auf 20°C abgekühlt, mit 400 ml Toluol versetzt und zweimal mit je 200 ml Wasser geschüttelt. Die organische Phase wird abgetrennt, über Natriumsulfat getrocknet und im Vakuum eingedampft. Nach Andestillieren bei 80°C im Hochvakuum bleiben 28,5 g (90 % der Theorie) O-Ethyl-O-i-propyl-O-(6-methyl-2-iso-propyl-pyrimidin-4-yl)-thionophosphorsäureester in Form eines hellgelben Öles mit dem Brechungsindex $n_D^{20}$: 1,4907 zurück.

Analog Beispiel 1 können die folgenden Verbindungen der Formel (I) hergestellt werden:

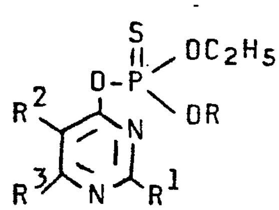

(I)

Tabelle 2

| Bsp.-Nr. | R | $R^1$ | $R^2$ | $R^3$ | Brechungsindex |
|---|---|---|---|---|---|
| 2 | $C_3H_7$-i | 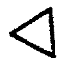 | H | $C_2H_5$-O | $n_D^{20}$:1,5078 |
| 3 | $C_3H_7$-i | $C_3H_7$-i | H | $CH_3S$-$CH_2$-O | $n_D^{21}$:1,5147 |
| 4 | $C_4H_9$-i | $CH_2$-$SO_2$-$CH_3$ | $CH_3O$ | H | $n_D^{24}$:1,5223 |
| 5 | $C_4H_9$-sec. | $C_3H_7$-i | H | $CH_3$ | $n_D^{25}$:1,4880 |
| 6 | $C_3H_7$-i | $CH_3O$ | H | $CH_3$ | $n_D^{23}$:1,5010 |
| 7 | $C_4H_9$-sec. | $CH_3O$ | H | $CH_3$ | $n_D^{23}$:1,5002 |
| 8 | $C_3H_7$-i | $(C_2H_5)_2N$ | H | $CH_3$ | $n_D^{23}$:1,5130 |
| 9 | $C_4H_9$-sec. | $(C_2H_5)_2N$ | H | $CH_3$ | $n_D^{23}$:1,5114 |
| 10 | $C_3H_7$-i | $CH_2$-S-$CH_3$ | $CH_3O$ | H | |
| 11 | $C_3H_7$-i | $CH_3S$ | H | $CH_3$ | |
| 12 | $C_3H_7$-i | $(CH_3)_2N$ | H | $CH_3$ | |
| 13 | $C_3H_7$-i | H | H | H | |
| 14 | $C_3H_7$-i | $C_3H_7$-i | $CH_3$ | $CH_3$ | |

Tabelle 2 (Fortsetzung)

| Bsp.-Nr. | R | $R^1$ | $R^2$ | $R^3$ | Brechungs-index |
|---|---|---|---|---|---|
| 15 | $C_3H_7$-i | $C_3H_7$-i | Cl | $CH_3$ | |
| 16 | $C_3H_7$-i | $C_2H_5$ | H | $C_2H_5O$ | $n_D^{22}$: 1,4893 |
| 17 | $C_4H_9$-sec. | $C_2H_5$ | H | $C_2H_5O$ | |
| 18 | $C_3H_7$-i | $C_3H_7$-i | H | $CH_3O$ | |
| 19 | $C_3H_7$-i | $C_4H_9$-tert. | H | $CH_3O$ | $n_D^{22}$: 1,4855 |
| 20 | $C_3H_7$-i | 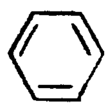 | H | $CH_3$ | |
| 21 | $C_3H_7$-iso | $CH_3$ | H | $C_4H_9$-tert. | |
| 22 | $C_3H_7$-iso | $C_2H_5O$ | H | $CH_3$ | $n_D^{22}$: 1,4961 |
| 23 | $C_4H_9$-sec. | i-$C_3H_7O$ | H | $CH_3$ | |
| 24 | $C_4H_9$-sec. | $C_2H_5O$ | H | $CH_3$ | $n_D^{22}$: 1,4978 |
| 25 | $C_3H_7$-iso | $C_4H_9$-tert. | H | $CH_3$ | $n_D^{22}$: 1,4868 |
| 26 | $C_4H_9$-sec. | $C_4H_9$-tert. | H | $CH_3$ | $n_D^{22}$: 1,4863 |
| 27 | $C_3H_7$-iso | $C_3H_7$-iso | $OCH_3$ | H | $n_D^{22}$: 1,4957 |

Patentansprüche

1. Pyrimidin-4-yl-thionophosphorsäureester der Formel (I)

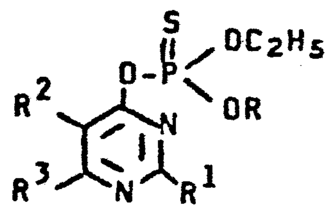

(I)

in welcher

R für i-Propyl oder sec.-Butyl steht,

$R^1$ für Wasserstoff, gegebenenfalls substituiertes Alkyl, Alkoxy, Alkylthio, Cycloalkyl, Dialkylamino oder Aryl steht,

$R^2$ für Wasserstoff, Halogen oder für gegebenenfalls substituierte Reste aus der Reihe Alkyl, Alkoxy oder Alkylthio steht und

$R^3$ für Wasserstoff oder gegebenenfalls substituierte Reste aus der Reihe Alkyl, Alkoxy oder Aryl steht.

2. Verbindungen der Formel (I) gemäß Anspruch 1, in welcher

R für i-Propyl oder sec.-Butyl steht und

$R^1$ für Wasserstoff, für gegebenenfalls durch $C_1$-$C_4$-Alkoxy, $C_1$-$C_4$-Alkylthio, $C_1$-$C_4$-Alkylsulfinyl oder $C_1$-$C_4$-Alkylsulfonyl substituiertes $C_1$-$C_6$-Alkyl, für $C_1$-$C_6$-Alkoxy, $C_1$-$C_6$-Alkylthio, $C_3$-$C_6$-Cycloalkyl, Di-($C_1$-$C_4$-Alkyl)-amino oder Phenyl steht,

$R^2$ für Wasserstoff, Chlor, Brom oder für gegebenenfalls durch $C_1$-$C_4$-Alkoxy, $C_1$-$C_4$-Alkylthio, $C_1$-$C_4$-Alkylsulfinyl oder $C_1$-$C_4$-Alkylsulfonyl substituierte Reste aus der Reihe $C_1$-$C_6$-Alkyl, $C_1$-$C_6$-Alkoxy oder $C_1$-$C_6$-Alkylthio steht und

$R^3$ für Wasserstoff, Phenyl oder für gegebenenfalls durch $C_1$-$C_4$-Alkoxy, $C_1$-$C_4$-Alkylthio, $C_1$-$C_4$-Alkylsulfinyl oder $C_1$-$C_5$-Alkylsulfonyl substituierte Reste aus der Reihe $C_1$-$C_6$-Alkyl oder $C_1$-$C_6$-Alkoxy steht.

3. Verbindungen der Formel (I) gemäß Anspruch 1, in welcher

R für i-Propyl oder sec.-Butyl steht und

$R^1$ für Wasserstoff, für gegebenenfalls durch $C_1$-$C_2$-Alkoxy, $C_1$-$C_2$-Alkylthio, $C_1$-$C_2$-Alkylsulfinyl oder $C_1$-$C_2$-Alkylsulfonyl substituiertes $C_1$-$C_4$-Alkyl, für $C_1$-$C_4$-Alkoxy, $C_1$-$C_4$-Alkylthio, Cyclopropyl, Cyclopentyl, Cyclohexyl, Di-($C_1$-$C_2$-)-alkylamino oder Phenyl steht,

$R^2$ für Wasserstoff, Chlor, für $C_1$-$C_4$-Alkyl, $C_1$-$C_4$-Alkoxy oder $C_1$-$C_4$-Alkylthio steht und

$R^3$ für Wasserstoff, Phenyl oder gegebenenfalls durch $C_1$-$C_2$-Alkoxy, $C_1$-$C_2$-Alkylthio, $C_1$-$C_2$-Alkylsulfinyl oder $C_1$-$C_2$-Alkylsulfonyl substituierte Reste aus der Reihe $C_1$-$C_4$-Alkyl oder $C_1$-$C_4$-Alkoxy steht.

4. Verbindungen der Formel (I) gemäß den Ansprüchen 1 bis 3, in welcher R für i-Propyl steht.

5. Verbindungen der Formel (I) gemäß den Ansprüchen 1 bis 3, in welcher R für sec.-Butyl steht.

6. Verfahren zur Herstellung der Pyrimidin-4-yl-thionophosphorsäureester der Formel (I)

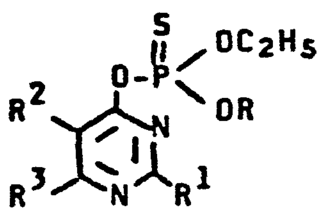

(I)

in welcher

R für i-Propyl oder sec.-Butyl steht,

$R^1$ für Wasserstoff, gegegenenfalls substituiertes Alkyl, Alkoxy, Alkylthio, Cycloalkyl, Dialkylamino oder Aryl steht,

$R^2$ für Wasserstoff, Halogen oder für gegebenenfalls substituierte Reste aus der Reihe Alkyl, Alkoxy oder Alkylthio steht und

$R^3$ für Wasserstoff oder gegebenenfalls substituierte Reste aus der Reihe Alkyl, Alkoxy oder Aryl steht,

dadurch gekennzeichnet, daß man die 4-Hydroxypyrimidine der Formel (II)

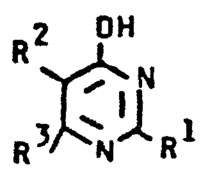

(II)

in welcher

$R^1$, $R^2$ und $R^3$ die oben angegebene Bedeutung haben,

oder die entsprechenden Alkalimetall-, Erdalkalimetall- oder Ammoniumsalze mit Halogeniden der Formel (III),

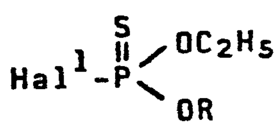

(III)

in welcher

R die oben angegebene Bedeutung hat und

$Hal^1$ für Halogen, wie Chlor oder Brom steht,

gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere Insekten und Akariden und Nematoden.

9. Verfahren zur Bekämpfung von Schädlingen, dadurch gekennzeichnet, daß man Verbindungen der Formel (I) gemäß Anspruch 1 oder 6 auf die Schädlinge, vorzugsweise Insekten, Akariziden und Nematoden oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.

Europäisches Patentamt

**EUROPÄISCHER RECHERCHENBERICHT**

**0185974**

Nummer der Anmeldung

EP 85 11 5276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | EP-A-0 001 602 (BAYER)<br>* Anspruch 1 *<br>--- | 1 | C 07 F 9/65<br>A 01 N 57/16 |
| X | DE-A-2 703 310 (BAYER)<br>* Anspruch 1 *<br>--- | 1 | |
| A,D | DE-A-2 737 401 (BAYER)<br>* Seite 22, Verbindung 6 *<br>--- | 1 | |
| A | DE-A-1 927 643 (BAYER)<br>* Seite 26, 4. Verbindung von oben; Seite 29, 2. Verbindung von oben; Seite 33, 1. Verbindung von oben; Seite 37, 2. Verbindung von oben *<br>--- | 1 | |
| A | EP-A-0 007 501 (BAYER)<br>----- | 1 | RECHERCHIERTE SACHGEBIETE (Int. Cl.4)<br>C 07 F 9/65<br>A 01 N 57/16 |

Der vorliegende Recherchenbericht wurde fur alle Patentansprüche erstellt

| Recherchenort | Abschlußdatum der Recherche | Prufer |
|---|---|---|
| BERLIN | 04-03-1986 | KAPTEYN H G |

KATEGORIE DER GENANNTEN DOKUMENTEN

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82